# EUROPEAN PATENT SPECIFICATION

(11) **EP 4 280 480 B1**
(45) Date of publication and mention of the grant of the patent: **18.12.2024**
(21) Application number: 22174040.0
(22) Date of filing: 18.05.2022
(51) Int. Cl.: H04B 17/00, H04B 17/15, H04B 17/29

(54) **APPARATUS,SYSTEM AND METHOD FOR TESTING A COMMUNICATION DEVICE**
VORRICHTUNG, SYSTEM UND VERFAHREN ZUM TESTEN EINER KOMMUNIKATIONSVORRICHTUNG
APPAREIL, SYSTÈME ET MÉTHODE POUR TESTER UN DISPOSITIF DE COMMUNICATION

(43) Date of publication of application: 22.11.2023
(73) Proprietor: FenztraQ GmbH, 80336 München (DE)
(72) Inventor: Grützun-Davey, Mark, 80337 München (DE)
(74) Representative: Leffers, Thomas

(56) References cited:
- EP-A1- 3 104 539
- EP-A1- 3 252 481
- EP-A1- 3 550 314
- WO-A2-99/30172
- US-A1- 2021 165 031

## Description

The present invention relates to an apparatus, a system and a method for testing a device under test, and, in particular, to a cost-effective and robust mechanism for testing a device under test.

Many electronic devices use wireless communication technologies for connectivity and communication purposes. As wireless devices transmit and receive electromagnetic energy, and as wireless devices have the potential of interfering with the operations of one another by virtue of their signal frequencies and power spectral densities, these wireless devices must adhere to various wireless technology standard specifications. Therefore, there is a need for testing wireless communication technologies before they are used in electronic devices.

There are test environments known, wherein such an electronic device is connected to an analysing device for analysing signals generated by the device in response to a test signal, wherein the electronic device is usually connected to the analysing device via at least one electric cable, for example at least one RF cable.

Nowadays, many electronic devices contain multiple transceiver devices to increase and ensure connectivity. These transceiver devices themselves may contain multiple individual antennae. For example, regarding the 5G standard the electronic device may have between 4 and 64 transceivers or even more. However, each antenna in each transceiver needs to be tested and verified compliant with the applicable standard, wherein it is not practicable or feasible to physically connect a RF cable to each transceiver, due to for example the costs of RF cables and as RF cables usually only have limited scalability, as solutions based on RF cables are usually adapted to a particular frequency.

There has also been developed Over-the-Air (OTA) testing. OTA-testing is a method used to predict the performance and reliability of a wireless device in the real world. The device under test is placed in a free space environment inside a test chamber, where real-life situations are simulated. The device is subjected to different test conditions to check how the device responds in various situations. OTA testing is a way to ensure that the devices designed or selected will perform the way it is intended to, by measuring its entire signal path and antenna performance. However, even when OTA-testing is used, the signals have to be extracted from the transceivers and transferred to a corresponding analysing device, wherein usually RF cables are used.

EP 3 104 539 A1 discloses a measuring system for measuring a communication device under test comprising an antenna-array. The measuring system comprises a control unit, a measuring device, at least one measuring antenna and a device under test mount. The device under test mount is adapted to hold the device under test and rotate the device under test around at least one axis. The control unit is adapted to set an antenna characteristic of the antenna-array of the device under test, thereby adjusting a set maximum gain direction of the antenna-array. Moreover, the control unit is adapted to instruct the device under test mount to rotate the device under test compensating for the set maximum gain direction of the antenna-array, so that the set maximum gain direction of the antenna-array meets a direction of the measuring antenna regarding the device under test.

EP 3 550 314 A1 discloses a system for testing a communication device.

It is an object of the present invention to provide a cost-effective and robust apparatus for testing a device under test.

According to one example, this object is solved by an apparatus for testing a communication device, wherein the apparatus comprises a positioning device, wherein the positioning device is configured to position the device under test in a test chamber, an analysing device, wherein the analysing device is configured to analyse signals generated by the device under test, respectively at least one antenna of the device under test, in response to a test signal, and a transmission unit, wherein the transmission unit is configured to transmit the signals generated by the at least one antenna from the positioning device to the analysing device, wherein the transmission unit comprises a first converter for converting the signals generated by the device under test from the electromagnetic domain into the optical domain to generate first converted signals, at least one fibre optic cable to transmit the first converted signals from the first converter to a second converter, wherein the second converter is configured to convert the first converted signals from the optical domain to the electromagnetic domain to generate second converted signals, and wherein the analysing device is configured to analyse the second converted signals.

Here, a test chamber is a shielded chamber that is used for testing electronic devices and, in particular, communication devices, especially wireless communication devices. The test chamber can for example be a RF shielded antenna test chamber for wireless technology testing.

A test signal is a signal to activate and/or control operation of the device under test, for example a self-test program implemented on the device under test, if the device under test is an active device, or a signal that is generated by a signal source respectively a signal generator if the device under test is a passive device.

Further, a fibre optic cable is an assembly similar to an electrical cable, but containing one or more optical fibres used to carry light. Compared to RF cables, fibre optic cables are much less expensive. Furthermore, as fibre optic cables are frequency independent and not limited by the number of signals to be injected respectively received, fibre optic cables have a greater practicality for testing electronic devices than for example RF cables, so that the testing can easily be automated and for example integrated in the production process, wherein fibre optic cables can easily be scaled.

Therein, by first converting the electrical signals generated by the electronic device, respectively the communication device under test into an optical or light signal, distortions of the signals can be avoided without having to costly modify the whole test arrangement.

Thus, an improved and, in particular, a cost-effective and robust apparatus for testing a device under test is provided.

In one embodiment, the first converter comprises a split unit, wherein the split unit is configured to split the signals generated by the at least one antenna, and at least one electro-optic modulator, wherein the at least one electro-optic modulator is configured to respectively modulate the split signals into the optical domain.

Here, an electro-optic modulator is an optical device in which a signal-controlled element exhibiting an electro-optic effect is used to modulate a beam of light. The modulation may be imposed on the phase, frequency, amplitude, or polarization of the beam.

Therein, electro-optic modulators can easily be implemented, customized and used to minimize problems arising from dispersion, wherein electro-optic modulators are user friendly and have the advantages that high optical power stability and extinction ratios can be achieved and that broadband signal processing up to the terahertz range is possible.

In a further embodiment, the first converter comprises a polarisation discriminator.

Here, a polarisation discriminator is a device that assigns a particular polarisation angle to a signal that is transmitted via the at least one fibre optic cable and is detected and received at the other end of the at least one fibre optic cable.

Therein, such a polarisation discriminator can be used to eliminate dispersion when transmitting signals over the at least one fibre optic cable.

The apparatus can further comprise a multiplexer, wherein the multiplexer is configured to generate a multiplexed signal in the optical domain based on the first converted signals, and wherein the transmission unit is configured to transmit the multiplexed signal over the at least one fibre optic cable.

Here, a multiplexer is a device that takes into account multiple input signals and combines, respectively multiplexes them together to a single, common line output.

Therefore, the at least one fibre optic cable can be split into multiple traffic channels and multiple data channels can be simultaneously transmitted over the at least one fibre optic cable. This is particularly advantageously if the tested electronic device contains multiple transceiver devices to increase and ensure connectivity.

Therein, the multiplexer can for example be an optical combiner that uses Wavelength Division Multiplexing to join respectively combine optical signals or a Time-based Multiplexer that uses Time Division Multiplexing to transmit multiple optical signals over a single fibre optic cable, whereby dispersion when transmitting signals over the at least one fibre optic cable can further be eliminated.

Further, the positioning device can be configured to freely move the device under test within the test chamber.

That the positioning device can move freely within the test chamber means that the positioning device can move with three or four degrees of freedom within the test chamber, respectively that the positioning device can move freely in the three-dimensional space without restrictions.

That the positioning device can be freely moved within the test chamber has the advantage that maxima and minima signal polarisation can be determined, whereby the accuracy of the testing can be increased. Further, in order to verify compliance with standards, a highly accurate and precise movement of the positioning device can be essential.

According to a further embodiment of the invention, a system for testing a communication device is provided, wherein the system comprises a signal generator for generating test signals and an apparatus for testing a communication device as described above.

Thus, a system is provided that comprises an improved and, in particular, a cost-effective and robust apparatus for testing a device under test. Therein, compared to RF cables, fibre optic cables are much less expensive. Further, fibre optic cables have a much greater bandwidth, a significantly increased transmission distance, and a significantly increased flexibility. Furthermore, as fibre optic cables are frequency independent and not limited by the number of signals to be injected respectively received, fibre optic cables have a greater practicality for testing electronic devices than for example RF cables, so that the testing can easily be automated and for example integrated in the production process, wherein fibre optic cables can easily be scaled. Therein, by first converting the electrical signals from the electronic device, respectively the communication device under test into an optical or light signal, distortions of the signals can be avoided without having to costly modify the whole test arrangement.

According to the invention, the system comprises a further transmitting unit for transmitting the test signals generated by the signal generator into the test chamber, wherein the further transmission unit comprises a third signal converter for converting the test signals generated by the signal source from the electromagnetic domain into the optical domain to generate third converted signals, a further fibre optic cable to transmit the third converted signals from the third converter to a fourth converter, wherein the fourth converter is placed in the test chamber, and wherein the fourth converter is configured to convert the third converted signals from the optical domain to the electromagnetic domain to generate fourth converted signals that are emitted in the test chamber. The at least one further fibre optic cable has again the advantages that, compared to RF cables, fibre optic cables are much less expensive. Further, fibre optic cables have a much greater bandwidth, a significantly increased transmission distance, and a significantly increased flexibility. Furthermore, as fibre optic cables are frequency independent and not limited by the number of signals to be injected respectively received, fibre optic cables have a greater practicality for testing electronic devices than for example RF cables, so that the testing can easily be automated and for example integrated in the production process, wherein fibre optic cables can easily be scaled. Therein, by first converting the signals generated by the signal generator into an optical or light signal, distortions of the signals can again be avoided without having to costly modify the whole test arrangement.

Further, the system can further comprise a further positioning device, wherein the further positioning device is configured to freely move a signal emitter within the test chamber.

Here, a signal emitter is a device that is configured to send, respectively emit the test signals generated by a signal generator or signal source within the test chamber.

That the further positioning device can move freely within the test chamber means that the positioning device can move with three or four degrees of freedom within the test chamber, respectively that the further positioning device can move freely in the three-dimensional space without restrictions.

That the further positioning device can freely move within the test chamber has again the advantage that maxima and minima signal polarisation can be determined, whereby the accuracy of the testing can be increased. Further, in order to verify compliance with standards, a highly accurate and precise movement of the further positioning device can be essential.

According to still a further embodiment of the invention, a method for testing a communication device is provided, wherein the device under test is positioned in a test chamber by a positioning device, a test signal is generated, signals generated by the device under test, respectively at least one antenna of the device under test in response to the test signal are acquired, the signals generated by the device under test are converted from the electromagnetic domain into the optical domain to generate first converted signals, the first converted signals are transmitted to an analysing device over at least one fibre optic cable, the signals transmitted over the at least one fibre optic cable are converted from the optical domain to the electromagnetic domain to generate second converted signals, and wherein the second converted signals are analysed by the analysing device.

Thus, an improved and, in particular, a cost-effective and robust method for testing a device under test. Therein, that at least one fibre optic cable is used has, compared to RF cables, the advantage, that fibre optic cables are much less expensive. Further, fibre optic cables have a much greater bandwidth, a significantly increased transmission distance, and a significantly increased flexibility. Furthermore, as fibre optic cables are frequency independent and not limited by the number of signals to be injected respectively received, fibre optic cables have a greater practicality for testing electronic devices than for example RF cables, so that the testing can easily be automated and for example integrated in the production process, wherein fibre optic cables can easily be scaled. Therein, by first converting the electrical signals from the electronic device, respectively the communication device under test into an optical or light signal, distortions of the signals can be avoided without having to costly modify the whole test arrangement.

In one embodiment, the step of converting the signals generated by the at least one antenna from the electromagnetic domain into the optical domain to generate first converted signals further comprises splitting the signals generated by the device under test and modulating the split signals into the optical domain using an electro-optical modulator. Therein, electro-optic modulators can easily be implemented, customized and used to minimize problems arising from dispersion, wherein electro-optic modulators are user friendly and have the advantages that high optical power stability and extinction ratios can be achieved and that broadband signal processing up to the terahertz range is possible.

In another embodiment, the step of converting the signals generated by the at least one antenna from the electromagnetic domain into the optical domain to generate first converted signals further comprises assigning a particular polarisation angle to each signal that is transmitted over the at least one fibre optic cable by a polarisation discriminator. Therein, such a polarisation discriminator can be used to eliminate dispersion when signals are transmitted over the at least one fibre optic cable.

The method can further comprise the step of multiplexing the first converted signals, wherein the step of transmitting the first converted signals to an analysing device over at least one fibre optic cable comprises transmitting the multiplexed first converted signals over the at least one fibre optic cable to the analysing device. Thus, the at least one fibre optic cable can be split into multiple traffic channels and multiple data channels can be simultaneously transmitted over the at least one fibre optic cable. This is particularly advantageously if the tested electronic device contains multiple transceiver devices to increase and ensure connectivity.

Therein, the corresponding multiplexer can for example be an optical combiner that uses Wavelength Division Multiplexing to join respectively combine optical signals or a Time-based Multiplexer that uses Time Division Multiplexing to transmit multiple optical signals over a single fibre optic cable, whereby dispersion when signals are transmitted over the at least one fibre optic cable can further be eliminated.

The method can also comprise the step of freely moving the positioning device within the test chamber. That the positioning device can be freely moved within the test chamber has again the advantage that maxima and minima signal polarisation can be determined, whereby the accuracy of the testing can be further increased. Further, in order to verify compliance with standards, a highly accurate and precise movement of the positioning device can be essential.

According to the invention, the test signals are generated by a signal generator, wherein the method comprises the steps of converting the test signal generated by the signal generator from the electromagnetic domain into the optical domain to generate third converted signals, transmitting the third converted signals into the test chamber over at least one fibre optic cable, and converting the third converted signals from the optical domain into the electromagnetic domain in the test chamber to generate fourth converted signals that are emitted in the test chamber. That at least one fibre optic cable is used has again the advantages that, compared to RF cables, fibre optic cables are much less expensive. Further, fibre optic cables have a much greater bandwidth, a significantly increased transmission distance, and a significantly increased flexibility Furthermore, as fibre optic cables are frequency independent and not limited by the number of signals to be injected respectively received, fibre optic cables have a greater practicality for testing electronic devices than for example RF cables, so that the testing can easily be automated and for example integrated in the production process, wherein fibre optic cables can easily be scaled. Therein, by first converting the signals generated by the signal generator into an optical or light signal, distortions of the signals can again be avoided without having to costly modify the whole test arrangement.

The method can also comprise the step of freely moving a signal emitter within the test chamber. That the signal emitter, respectively a further positioning device on which the signal emitter is positioned, can be freely moved within the test chamber has again the advantage that maxima and minima signal polarisation can be determined, whereby the accuracy of the testing can be increased. Further, in order to verify compliance with standards, a highly accurate and precise movement of the signal emitter respectively the further positioning device can be essential.

Embodiments of the invention will now be described with reference to the attached drawings.
- Figure 1: illustrates an apparatus for testing a communication device according to a first embodiment of the invention;
- Figure 2: illustrates a system for testing a communication device according to a second embodiment of the invention;
- Figure 3: illustrates a system for testing a communication device according to a third embodiment of the invention;
- Figure 4: illustrates a flowchart of a method for testing a communication device according to embodiments of the invention.

Embodiments of the invention will now be described with reference to the attached drawings.

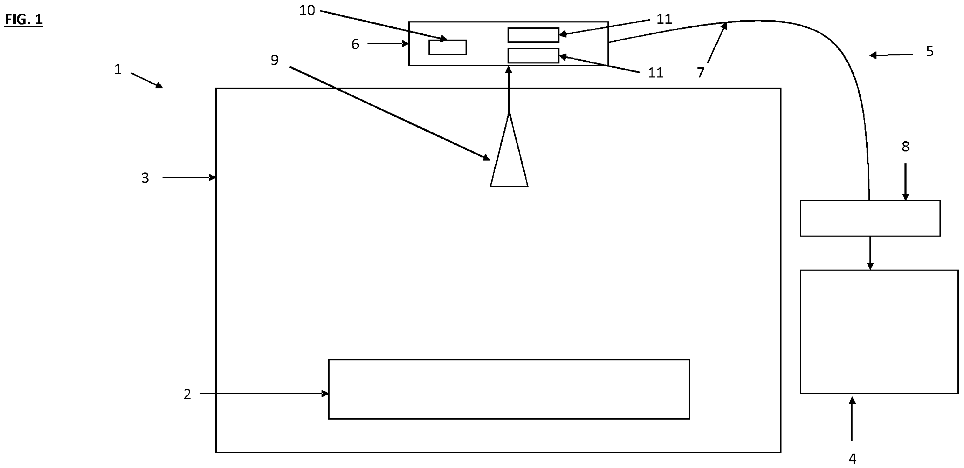

Fig. 1 illustrates an apparatus for testing a communication device 1 according to a first embodiment of the invention.

The shown apparatus 1 is configured for analysing, testing, validating or certifying the veracity of Radio High Frequency modulated signals in the three-dimensional space whilst the device under test and/or a signal emitter being assessed in motion.

In particular, Fig. 1 shows an apparatus 1 that is suitable for production testing of mobile devices with one or more antennae including 5G, wherein, however, the apparatus is also applicable for all RF products and applications including for example the Internet of Things (IoT), 3G, 4G, 6G, Bluetooth, Zigbee or WIFI.

According to the first embodiment, the apparatus 1 is particularly configured to test an active device, and therefore, a device that outputs particular signal, such as a mobile device under its own control in a 5G or WIFI environment.

As shown in Fig. 1, the apparatus for testing a communication device 1 comprises a positioning device 2, wherein the positioning device 2 is configured to position the device under test in a test chamber 3, an analysing device 4, wherein the analysing device 4 is configured to analyse signals generated by the device under test in in response to a test signal, and a transmitting unit 5, wherein the transmitting unit 5 is configured to transmit the signals generated by the device under test from the positioning device 2 to the analysing device 4, wherein the transmitting unit 5 comprises a first converter 6 for converting the signals generated by the device under test from the electromagnetic domain into the optical domain to generate first converted signals, a fibre optic cable 7 to transmit the first converted signals to a second converter 8, wherein the second converter 8 is configured to convert the first converted signals from the optical domain to the electromagnetic domain to generate second converted signals, and wherein the analysing device 4 is configured to analyse the second converted signals.

Thus, Fig. 1 shows an improved and, in particular, a cost-effective and robust apparatus for testing a device under test. Therein, compared to RF cables, fibre optic cables are much less expensive. Further, fibre optic cables have a much greater bandwidth, a significantly increased transmission distance, and a significantly increased flexibility. Furthermore, as fibre optic cables are frequency independent and not limited by the number of signals to be injected respectively received, fibre optic cables have a greater practicality for testing electronic devices than for example RF cables, so that the testing can easily be automated and for example integrated in the production process, wherein fibre optic cables can easily be scaled. Therein, by first converting the electrical signals from the electronic device, respectively the communication device under test into an optical or light signal, distortions of the signals can be avoided without having to costly modify the whole test arrangement.

According to the first embodiment, the test chamber 3 is a RF Anechoic chamber. However, the test chamber can be any other shielded chamber that is used for testing electronic devices and, in particular, communication devices, especially wireless communication devices, too.

Further, the test signal can be a signal to activate and/or control operation of the device under test, for example a self-test program implemented on the device under test, wherein the device under test can for example be correspondingly controlled by the self-test program or a link to a test system.

The apparatus 1 further comprises a measurement probe 9 respectively a measurement antenna that is configured to collect the signals generated by the device under test, wherein, according to the first embodiment, the measurement probe is positioned in such a way that it is facilitated that the signals generated by the device under test, respectively all appropriate signals for analysis are directly injected into the first converter 6, whereby the corresponding physical distance can be minimized.

Further, the analysing device is configured to utilize known signal analysis techniques for analysing electromagnetic signals.

According to the first embodiment, the first converter 7 comprises a split unit 10, wherein the split unit 10 is configured to split the signals generated by the device under test and electro-optic modulators 11, wherein the electro-optic modulators 11 are respectively configured to modulate the split signals into the optical domain.

In particular, in order to convert the signals from the electromagnetic domain to the optical domain, the signal is split into specified bands or defined frequency ranges and modulated into the optical domain using electro-optic modulators 11. According to the first embodiment, the split signals are modulated into the optical domain using a laser source, wherein the modulated signals are then combined into a single fibre optic signal and transmitted along the fibre optic cable 6. After the fibre optic signal has been transmitted through the fibre optic cable 6, the fibre optic signal is inputted into the second converter 8, where it is split again, wherein the split signals are converted back into the electromagnetic domain, filtered and combined into a single RF signal for analysis by the analysing device 4.

According to the first embodiment, the positioning device 2 is further configured to freely move the device under test within the test chamber 3.

In particular, to measure the response of an active device to test signals, the shown apparatus 1 has a configuration in which the device under test can be dynamically moved. The positioning device 2 is used to move the device under test with extremely high accuracy in the three-dimensional space. Further, the electromagnetic signals generated by the device under test are immediately converted from the electromagnetic domain into the optical domain, whereafter the signals are transferred to the analysing device 4 where the signals are converted back to the electromagnetic domain for analysis of the signals from the optical domain.

Therein, the apparatus 1 can be used for automating the testing process, as the transmitting unit 5 is frequency independent and not limited by the number of signals to be injected or received.

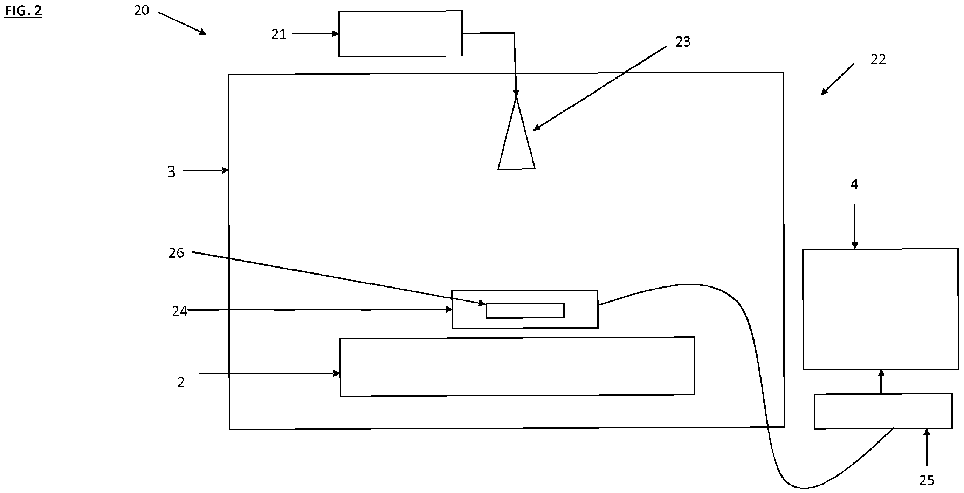

Fig. 2 illustrates a system for testing a communication device 20 according to a second embodiment of the invention. Therein, identical structural features as within the first embodiment shown in Fig. 1 are identified by identical reference numbers.

As shown in Fig. 2, the system 20 according to the second embodiment comprises a signal generator for generating test signals 21 and an apparatus for testing a communication device 22 based on test signals generated by the signal generator.

Therein, the signal generator is configured to generate corresponding electromagnetic test signals, wherein, according to the second embodiment, the signal generator 21 is configured to generate RF signals, and wherein the generated RF signals are emitted in the test chamber 3 by a signal emitter 23.

Further, as shown in Fig. 2, the apparatus for testing a communication device 22 again comprises a positioning device 2, wherein the positioning device 2 is configured to position the device under test in a test chamber 3, an analysing device 4, wherein the analysing device 4 is configured to analyse signals generated by the device under test in in response to a test signal, and a transmitting unit 5, wherein the transmitting unit 5 is configured to transmit the signals generated by the device under test from the positioning device 2 to the analysing device 4, wherein the transmitting unit 5 comprises a first converter 24 for converting the signals generated by the device under test from the electromagnetic domain into the optical domain to generate first converted signals, a fibre optic cable 7 to transmit the first converted signals to a second converter 25, wherein the second converter 25 is configured to convert the first converted signals from the optical domain to the electromagnetic domain to generate second converted signals, and wherein the analysing device 4 is configured to analyse the second converted signals.

According to the second embodiment, the first converter 24 comprises a polarisation discriminator 26 that is configured to assign a particular polarisation angle to the signal that is transmitted over the fibre optic cable 6, wherein the second converter 25 is configured to execute the reverse process in order to convert the signal to the electromagnetic domain again..

Further, the main difference between the apparatus according to the first embodiment shown in Fig. 1 and the system 20, respectively the apparatus 22 according to the second embodiment shown in Fig. 2 is that the apparatus for testing a communication device 22 according to the second embodiment is particularly configured to test a passive device, and therefore, a device that responds to a signal field, for example an antenna, wherein the corresponding responses are extracted from the device.

In particular, the positioning device 2 is again configured to freely move within the test chamber 3, wherein, according to the second embodiment, the positioning device 2 comprises a carriage designed to hold the device under test, wherein the first converter 24 is positioned and the carriage is configured in such a way, that the responses of the device under test, respectively all appropriate signals for analysis are directly injected into the first converter 24, thereby minimizing the corresponding physical distance and ensuring the highest integrity and minimum signal loss. The responses are then again transferred over the fibre optic cable 6 to the second converter 25, where they are converted back to the electromagnetic domain from the optical domain, and wherein the corresponding electromagnetic signals can then be measured, tested, or verified by the analysing device 4, respectively be measured, tested, or verified by common signal analysis techniques for signals in the electromagnetic domain.

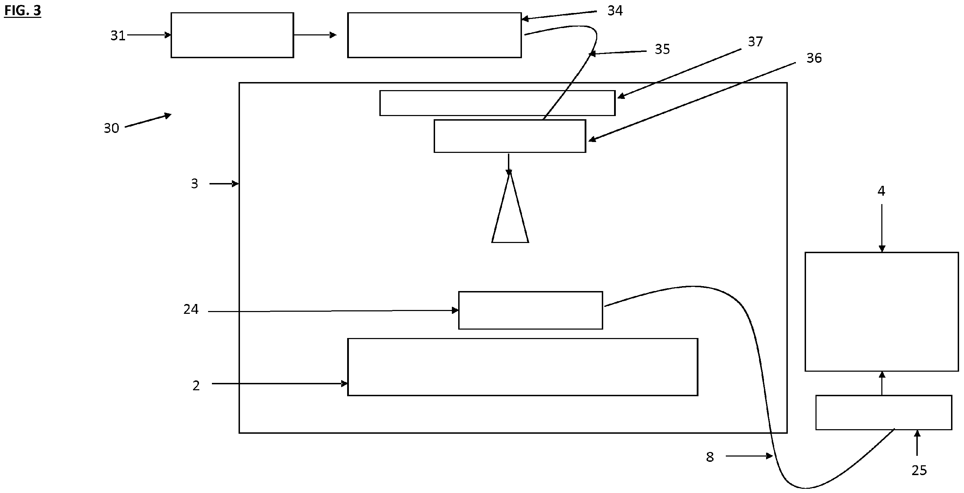

Fig. 3 illustrates a system for testing a communication device 30 according to a third embodiment of the invention. Therein, identical structural features as within the first embodiment shown in Fig. 1 and the second embodiment shown in Fig. 2 are identified by identical reference numbers.

As shown in Fig. 3, also the system 30 according to the third embodiment comprises a signal generator for generating test signals 31 and an apparatus for testing a communication device 22 based on test signals generated by the signal generator.

Therein, the signal generator 31 is configured to generate corresponding electromagnetic test signals, wherein, according to the third embodiment, the signal generator 31 is configured to generate RF signals, and wherein the generated RF signals are emitted in the test chamber 3 by a signal emitter 32.

Further, also the system according to the third embodiment is configured to test a passive device.

The main difference between the system 20 according to the second embodiment shown in Fig. 2 and the system 30 according to the third embodiment shown in Fig. 3 is that the system 30 according to the third embodiment comprises a further transmitting unit 33 for transmitting the test signals generated by the signal generator 31 into the test environment, respectively to the signal emitter 32, wherein the further transmission unit 33 comprises a third signal converter 34 for converting the test signals generated by the signal generator 31 from the electromagnetic domain into the optical domain to generate third converted signals, a further fibre optic cable 35 to transmit the first converted signals to a fourth converter 36, wherein the fourth converter 36 is placed in the test chamber 3, and wherein the fourth converter 36 to convert the third converted signals from the optical domain to the electromagnetic domain to generate fourth converted signals, and wherein the signal emitter 32 is configured to emit the fourth converted signals.

In particular, according to the third embodiment, the initially generated RF signal is converted into the optical domain at the point of generation, whereby the signal can then be transmitted by the further fibre optic cable 34 into the test chamber 3 without impunity,
This also provides the possibility of multiplexing the signals across multiple test chamber such that a sequenced control of a production test system can increase throughput and efficiency with minimum costs.

Further, this approach further increases the automation potential of a production system allowing for a huge increase in throughput at a much-reduced level of investment as usually the signal generators 31 and the analysing devices 4, which are both placed outside of the test chamber 3, are the most expensive components. Therein, similar to the system 20 according to the second embodiment, only a single signal generator 31 is required to allow multiple devices to be tested concurrently by multiplexing the corresponding signal.

According to the third embodiment, the system 30 further comprises a further positioning device 37, wherein the further positioning device 37 is configured to freely move a signal emitter 32 within the test chamber 3. In particular, the signal emitter 32 can be positioned at any convenient location and does not have to be co-located with the test chamber 3 and the positioning device 2.

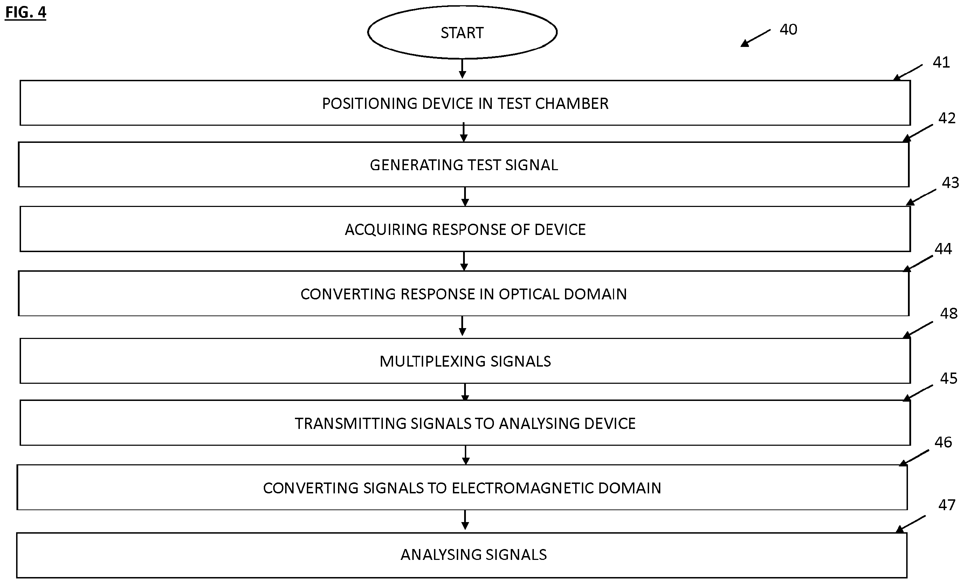

Fig. 4 illustrates a flowchart of a method for testing a communication device 40 according to embodiments of the invention.

As shown in Fig. 4, the method 40 comprises a step 41 of positioning the device under test is in a test chamber by a positioning device and a step 42 of generating a test signal, respectively exposing the device under test to a test signal in the test chamber, wherein in a step 43 signals generated by the device under test in response to the test signal are acquired, wherein the signals generated by the device under test are converted from the electromagnetic domain into the optical domain to generate first converted signals in a step 44, wherein the first converted signals are transmitted to an analysing device over at least one fibre optic cable in a step 45, wherein the signals transmitted over the fibre optic cable are converted from the optical domain to the electromagnetic domain to generate second converted signals in a step 46, and wherein the second converted signals are analysed by the analysing device in a step 47.

According to the embodiments shown in Fig. 4, the method further comprises a step 48 of multiplexing the first converted signals, wherein the step 45 of transmitting the first converted signals to an analysing device over at least one fibre optic cable comprises transmitting the multiplexed first converted signals over the at least one fibre optic cable to the analysing device.

According to the embodiments of Fig. 4, the step 48 of multiplexing the first converted signals comprises an optical combination of the signals, wherein Wavelength Division Multiplexing is used to join respectively combine the corresponding optical signals.

However, the step of multiplexing the first converted signals can for example also comprise to use Time Division Multiplexing to transmit multiple signals over the further fibre optic cable.

## Claims

1. System for testing a communication device, wherein the system (20,30) comprises a signal generator for generating test signals (21,31) and an apparatus for testing a communication device (22), wherein the apparatus for testing a communication device (22) comprises a positioning device (2), wherein the positioning device (2) is configured to position the device under test in a test chamber (3), an analysing device (4), wherein the analysing device (4) is configured to analyse signals generated by the device under test in in response to a test signal, and a transmitting unit (5), wherein the transmitting unit (5) is configured to transmit the signals generated by the device under test from the positioning device (2) to the analysing device (4), wherein the transmitting unit (5) comprises a first signal converter (6,24) for converting the signals generated by the device under test from the electromagnetic domain into the optical domain to generate first converted signals, at least one fibre optic cable (7) to transmit the first converted signals from the first converter (6,24) to a second converter (8,25) for converting the first converted signals from the optical domain to the electromagnetic domain to generate second converted signals, and wherein the analysing device (4) is configured to analyse the second converted signals, **characterized in that** the system (30) comprises a further transmitting unit (33) for transmitting the test signals generated by the signal generator (31) into the test chamber (3), wherein the further transmitting unit (33) comprises a third signal converter (34) for converting the test signals generated by the signal generator (31) from the electromagnetic domain into the optical domain to generate third converted signals, a further fibre optic cable (35) to transmit the third converted signals from the third converter (34) to a fourth converter (36), wherein the fourth converter (36) is placed in the test chamber, and wherein the fourth converter (36) is configured to convert the third converted signals from the optical domain to the electromagnetic domain to generate fourth converted signals that are emitted in the test chamber (3).

2. System according to claim 1, wherein the first converter (6) comprises a split unit (10), wherein the split unit (10) is configured to split the signals generated by the device under test, and at least one electro-optic modulator (11), wherein the at least one electro-optic modulator (11) is configured to modulate the split signals into the optical domain.

3. System according to claim 1, wherein the first converter (24) comprises a polarisation discriminator (26).

4. System according to one of claims 1 to 3, wherein the apparatus further comprises a multiplexer, wherein the multiplexer is configured to generate a multiplexed signal in the optical domain based on the first converted signals, and wherein the transmitting unit is configured to transmit the multiplexed signal over the at least one fibre optic cable.

5. System according to one of claims 1 to 4, wherein the positioning device (2) is configured to freely move the device under test within the test chamber.

6. System according to one of claims 1 to 5, wherein the system (30) further comprises a further positioning device (37), wherein the further positioning device (37) is configured to freely move a signal emitter (32) within the test chamber (3).

7. Method for testing a communication device, wherein the method (40) comprises the steps of:
- Positioning the device under test in a test chamber by a positioning device (41);
- Generating a test signal (42);
- Acquiring signals generated by the device under test in response to the test signal (43);
- Converting the signals generated by the device under test from the electromagnetic domain into the optical domain to generate first converted signals (44);
- Transmitting the first converted signals to an analysing device over at least one fibre optic cable (45);
- Converting the signals transmitted over the fibre optic cable from the optical domain to the electromagnetic domain to generate second converted signals (46); and
- Analysing the second converted signals by the analysing device (47),
wherein the test signals are generated by a signal generator, **characterized in that** the method further comprises the steps of:
- Converting the test signals generated by the signal generator from the electromagnet-ic domain into the optical domain to generate third converted signals;
- Transmitting the third converted signals into the test chamber over at least one fibre optic cable; and
- Converting the third converted signals from the optical domain into the electromagnetic domain in the test chamber.

8. Method according to claim 7, wherein the step of converting the signals generated by the device under test from the electromagnetic domain into the optical domain to generate first converted signals further comprises the steps of:
- Splitting the signals generated by the device under test; and
- Modulating the split signals into the optical domain using at least one electro-optical modulator.

9. Method according to claim 7, wherein the step of converting the signals generated by the device under test from the electromagnetic domain into the optical domain to generate first converted signals further comprises the step of:
- Assigning a particular polarisation angle to each signal that is transmitted over the at least one fibre optic cable by a polarisation discriminator.

10. Method according to one of claims 7 to 9, wherein the method (40) further comprises the step of multiplexing the first converted signals to generate multiplexed first converted signals (48), and wherein the step of transmitting the first converted signals to an analysing device over at least one fibre optic cable (45) comprises transmitting the multiplexed first converted signals over the at least one fibre optic cable to the analysing device.

11. Method according to one of claims 7 to 10, wherein the method further comprises the step of:
- Freely moving the positioning device in the measurement environment.

12. Method according to one of claims 7 to 11, wherein the method further comprises the step of:
- Freely moving a signal emitter in the measurement environment.

## Patentansprüche

1. System zum Testen einer Kommunikationsvorrichtung, wobei das System (20, 30) einen Signalgenerator zur Erzeugung von Testsignalen (21, 31) und eine Vorrichtung zum Testen einer Kommunikationsvorrichtung (22) aufweist, wobei die Vorrichtung zum Testen einer Kommunikationsvorrichtung eine Positionierungsvorrichtung (2), wobei die Positionierungsvorrichtung (2) konfiguriert ist, um die zu testende Vorrichtung in einer Testkammer (3) zu positionieren, eine Analysevorrichtung (4), wobei die Analysevorrichtung (4) konfiguriert ist, um Signale zu analysieren, die von der zu testenden Vorrichtung als Reaktion auf ein Testsignal erzeugt werden, und eine Übertragungseinheit (5) aufweist, wobei die Übertragungseinheit (5) konfiguriert ist, um die von der zu testenden Vorrichtung erzeugten Signale von der Positionierungsvorrichtung (2) an die Analysevorrichtung (4) zu übertragen, wobei die Übertragungseinheit (5) einen ersten Signalwandler (6, 24) zum Umwandeln der von der zu testenden Vorrichtung erzeugten Signale aus dem elektromagnetischen Bereich in den optischen Bereich, um erste umgewandelte Signale zu erzeugen, mindestens ein Glasfaserkabel (7) zum Übertragen der ersten umgewandelten Signale von dem ersten Wandler (6, 24) zu einem zweiten Wandler (8, 25) zum Umwandeln der ersten umgewandelten Signale aus dem optischen Bereich in den elektromagnetischen Bereich, um zweite umgewandelte Signale zu erzeugen, aufweist, und wobei die Analysevorrichtung (4) zum Analysieren der zweiten umgewandelten Signale konfiguriert ist, **dadurch gekennzeichnet, dass** das System (30) eine weitere Übertragungseinheit (33) zum Übertragen der von dem Signalgenerator (31) erzeugten Testsignale in die Testkammer (3) aufweist, wobei die weitere Übertragungseinheit (33) einen dritten Signalwandler (34) zum Umwandeln der von dem Signalgenerator (31) erzeugten Testsignale von dem elektromagnetischen Bereich in den optischen Bereich umfasst, um dritte umgewandelte Signale zu erzeugen, ein weiteres Glasfaserkabel (35) zum Übertragen der dritten umgewandelten Signale vom dritten Wandler (34) zu einem vierten Wandler (36), wobei der vierte Wandler (36) in der Testkammer angeordnet ist und wobei der vierte Wandler (36) so konfiguriert ist, dass er die dritten umgewandelten Signale vom optischen Bereich in den elektromagnetischen Bereich umwandelt, um vierte umgewandelte Signale zu erzeugen, die in die Prüfkammer (3) emittiert werden.

2. System nach Anspruch 1, wobei der erste Wandler (6) eine Teilungseinheit (10) aufweist, wobei die Teilungseinheit (10) so konfiguriert ist, dass sie die von der zu testenden Vorrichtung erzeugten Signale aufspaltet, und mindestens einen elektrooptischen Modulator (11),wobei der mindestens eine elektrooptische Modulator (11) so konfiguriert ist, dass er die aufgespalteten Signale in den optischen Bereich moduliert.

3. System nach Anspruch 1, wobei der erste Wandler (24) einen Polarisationsdiskriminator (26) umfasst.

4. System nach einem der Ansprüche 1 bis 3, wobei die Vorrichtung ferner einen Multiplexer umfasst, wobei der Multiplexer so konfiguriert ist, dass er ein zusammengefasstes Signal in dem optischen Bereich auf der Grundlage der ersten umgewandelten Signale erzeugt, und wobei die Übertragungseinheit so konfiguriert ist, dass sie das zusammengefasste Signal über das mindestens eine Glasfaserkabel überträgt.

5. System nach einem der Ansprüche 1 bis 4, wobei die Positioniervorrichtung (2) so konfiguriert ist, dass sie die zu testende Vorrichtung innerhalb der Testkammer frei bewegen kann.

6. System nach einem der Ansprüche 1 bis 5, wobei das System (30) ferner eine weitere Positionierungsvorrichtung (37) aufweist, wobei die weitere Positionierungsvorrichtung (37) so konfiguriert ist, dass sie einen Signalemitter (32) innerhalb derTestkammer (3) frei bewegen kann.

7. Verfahren zum Testen einer Kommunikationsvorrichtung, wobei das Verfahren (40) die folgenden Schritte umfasst:
- Positionieren der zu testenden Vorrichtung in einer Testkammer durch eine Positioniervorrichtung (41);
- Erzeugen eines Testsignals (42);
- Erfassen von Signalen, die von der zu testenden Vorrichtung als Reaktion auf das Testsignal (43) erzeugt werden;
- Umwandeln der von der zu testenden Vorrichtung erzeugten Signale aus dem elektromagnetischen Bereich in den optischen Bereich, um erste umgewandelte Signale (44) zu erzeugen;
- Übertragen der ersten umgewandelten Signale an eine Analysevorrichtung über mindestens ein Glasfaserkabel (45);
- Umwandeln der über das Glasfaserkabel übertragenen Signale aus dem optischen Bereich in den elektromagnetischen Bereich, um zweite umgewandelte Signale (46) zu erzeugen;
- und Analysieren der zweiten umgewandelten Signale durch die Analysevorrichtung (47);
wobei die Testsignale von einem Signalgenerator erzeugt werden und wobei das Verfahren ferner die folgenden Schritte umfasst:
- Umwandeln der vom Signalgenerator erzeugten Testsignale aus dem elektromagnetischen Bereich in den optischen Bereich, um dritte umgewandelte Signale zu erzeugen;
- Übertragen der dritten umgewandelten Signale in die Testkammer über mindestens ein Glasfaserkabel; und
- Umwandeln der dritten umgewandelten Signale aus dem optischen Bereich in den elektromagnetischen Bereich in der Prüfkammer.

8. Verfahren nach Anspruch 7, wobei der Schritt des Umwandelns der von der zu testenden Vorrichtung erzeugten Signale von dem elektromagnetischen Bereich in den optischen Bereich zur Erzeugung erster umgewandelter Signale ferner die folgenden Schritte umfasst:
- Aufspaltung dervon der zu testenden Vorrichtung erzeugten Signale; und
- Modulieren der aufgespalteten Signale in den optischen Bereich mittels mindestens einem elektrooptischen Modulator.

9. Verfahren nach Anspruch 7, wobei der Schritt des Umwandelns der von der zu testenden Vorrichtung erzeugten Signale von dem elektromagnetischen Bereich in den optischen Bereich zur Erzeugung erster umgewandelter Signale ferner den Schritt umfasst:
Zuweisung eines bestimmten Polarisationswinkels zu jedem Signal, das über das mindestens eine Glasfaserkabel übertragen wird, durch einen Polarisationsdiskriminator.

10. Verfahren nach einem der Ansprüche 7 bis 9, wobei das Verfahren (40) ferner den Schritt des Zusammenfassens der ersten umgewandelten Signale umfasst, um zusammengefasste erste umgewandelte Signale (48) zu erzeugen, und wobei der Schritt des Übertragens der ersten umgewandelten Signale an eine Analysevorrichtung über mindestens ein Glasfaserkabel (45) das Übertragen der zusammengefassten ersten umgewandelten Signale über das mindestens eine Glasfaserkabel an die Analysevorrichtung umfasst.

11. Verfahren nach einem der Ansprüche 7 bis 10, wobei das Verfahren ferner den folgenden Schritt umfasst:
- Freies Bewegen der Positioniervorrichtung innerhalb der Testkammer.

12. Verfahren nach einem der Ansprüche 7 bis 11, wobei das Verfahren ferner den Schritt umfasst:
- Freies Bewegen eines Signalgebers innerhalb der Testkammer.

## Revendications

1. Système de test d'un dispositif de communication, dans lequel le système (20,30) comprend un générateur de signaux pour générer des signaux de test (21,31) et appareil pour tester un dispositif de communication (22), dans lequel l' appareil pour tester un dispositif de communication comprenant un dispositif de positionnement (2), dans lequel le dispositif de positionnement (2) est configuré pour positionner le dispositif testé dans une chambre de test (3), un dispositif d'analyse (4), dans lequel le dispositif d'analyse (4) est configuré pour analyser les signaux générés par le dispositif testé en réponse à un signal de test, et une unité de transmission (5), dans laquelle l'unité de transmission (5) est configurée pour transmettre les signaux générés par le dispositif testé à partir du dispositif de positionnement (2) au dispositif d'analyse (4), dans lequel l'unité de transmission (5) comprend un premier convertisseur de signal (6,24) pour convertir les signaux générés par le dispositif testé du domaine électromagnétique au domaine optique afin de générer un premier signal converti, au moins un câble à fibres optiques (7) pour transmettre les premiers signaux convertis du premier convertisseur (6,24) à un second convertisseur (8,25) pour convertir les premiers signaux convertis du domaine optique au domaine électromagnétique afin de générer des seconds signaux convertis, et dans lequel le dispositif d'analyse (4) est configuré pour analyser les seconds signaux convertis, **caractérisé en ce que** le système (30) comprend une autre unité de transmission (33) pour transmettre les signaux de test générés par le générateur de signaux (31) dans la chambre d'essai (3), dans laquelle l'autre unité de transmission (33) comprend un troisième convertisseur de signaux (34) pour convertir les signaux de test générés par le générateur de signaux (31) du domaine électromagnétique vers le domaine optique pour générer des troisièmes signaux convertis, un autre câble à fibres optiques (35) pour transmettre les troisièmes signaux convertis du troisième convertisseur (34) à un quatrième convertisseur (36), dans lequel le quatrième convertisseur (36) est placé dans la chambre d'essai, et dans lequel le quatrième convertisseur (36) est configuré pour convertir les troisièmes signaux convertis du domaine optique au domaine électromagnétique pour générer des signaux de quatrième conversion qui sont émis dans la chambre d'essai (3).

2. Système selon la revendication 1, dans lequel le premier convertisseur (6) comprend une unité de division (10), dans laquelle l'unité de division (10) est configurée pour diviser les signaux générés par le dispositif testé, et au moins un modulateur électro-optique (11), dans lequel le ou les modulateurs électro-optiques (11) sont configurés pour moduler les signaux divisés dans le système optique.

3. Système selon la revendication 1, dans lequel le premier convertisseur (24) comprend un discriminateur de polarisation (26).

4. Système selon l'une des revendications 1 à 3, dans lequel l'appareil comprend en outre un multiplexeur, dans lequel le multiplexeur est configuré pour générer un signal multiplexé dans le domaine optique sur la base des premiers signaux convertis, et dans lequel l'unité de transmission est configurée pour transmettre le signal multiplexé sur au moins un câble à fibres optiques.

5. Système selon l'une des revendications 1 à 4, dans lequel le dispositif de positionnement (2) est configuré pour déplacer librement le dispositif testé à l'intérieur de la chambre d'essai.

6. Système selon l'une des revendications 1 à 5, dans lequel le système (30) comprend en outre un autre dispositif de positionnement (37), dans lequel l'autre dispositif de positionnement (37) est configuré pour déplacer librement un émetteur de signal (32) à l'intérieur de la chambre d'essai (3).

7. Méthode de test d'un dispositif de communication, dans laquelle la méthode (40) comprend les étapes suivantes :
- Positionner l'appareil testé dans une chambre d'essai à l'aide d'un dispositif de positionnement (41);
- Génération d'un signal de test (42) ;
- Acquisition des signaux générés par le dispositif testé en réponse au signal de test (43) ;
- Convertir les signaux générés par le dispositif testé du domaine électromagnétique au domaine optique pour générer les premiers signaux convertis (44) ;
- Transmission des premiers signaux convertis à un dispositif d'analyse par l'intermédiaire d'au moins un câble à fibre optique (45) ;
- Convertir les signaux transmis par le câble à fibres optiques du domaine optique au domaine électromagnétique pour générer des seconds signaux convertis (46) ; et
- Analyse des seconds signaux convertis par le dispositif d'analyse (47);
dans lequel les signaux de test sont générés par un générateur de signaux, et dans lequel le procédé comprend en outre les étapes suivantes :
- Convertir les signaux de tests générés par le générateur de signaux du domaine électromagnétique dans le domaine optique pour générer des troisièmes signaux convertis;
- Transmettre les troisièmes signaux convertis dans la chambre de test par l'intermédiaire d'au moins un câble à fibres optiques ; et
- Convertir les troisièmes signaux convertis du domaine optique dans le domaine électromagnétique dans la chambre d'essai.

8. Méthode selon la revendication 7, dans lequel l'étape de conversion des signaux générés par le dispositif testé du domaine électromagnétique dans le domaine optique pour générer les premiers signaux convertis comprend en outre les étapes suivantes :
- Diviser les signaux générés par le dispositif testé ; et
- Moduler les signaux divisés dans le domaine optique à l'aide d'au moins un modulateur électro-optique.

9. Méthode selon la revendication 7, dans lequel l'étape de conversion des signaux générés par le dispositif testé du domaine électromagnétique dans le domaine optique pour générer les premiers signaux convertis comprend en outre l'étape suivante :
- Attribution d'un angle de polarisation particulier à chaque signal transmis sur au moins un câble à fibres optiques par un discriminateur de polarisation.

10. Méthode selon l'une des revendications 7 à 9, dans lequel la méthode (40) comprend en outre l'étape de multiplexage des premiers signaux convertis pour générer des premiers signaux convertis multiplexés (48), et dans lequel l'étape de transmission des premiers signaux convertis vers un dispositif d'analyse par l'intermédiaire d'au moins un câble à fibres optiques (45) comprend la transmission des premiers signaux convertis multiplexés par l'intermédiaire d'au moins un câble à fibres optiques vers le dispositif d'analyse.

11. Méthode selon l'une des revendications 7 à 10, dans lequel le procédé comprend en outre de :
- Déplacer librement le dispositif de positionnement dans l'environnement de mesure.

12. Méthode selon l'une des revendications 7 à 11, dans lequel le procédé comprend en outre l'étape suivante :
- Déplacement libre d'un émetteur de signaux dans l'environnement de mesure.
